# EUROPEAN PATENT APPLICATION

(11) **EP 3 985 689 A1**
(43) Date of publication of application: **20.04.2022**
(21) Application number: 20822805.6
(22) Date of filing: 11.05.2020
(51) Int. Cl.: H01B 11/22, H01B 7/14, G02B 6/44

(54) **LANDING CABLE AND PARTIAL LANDING CABLE**

(30) Priority: 13.06.2019 JP 2019110497
(71) Applicant: NEC Corporation, 108-8001 Tokyo (JP)
(72) Inventor: YANO, Yutaka, Tokyo 108-8001 (JP); MISUMI Eitaro, Tokyo 108-8001 (JP)
(74) Representative: Reeve, Nicholas Edward
(86) International application number: PCT/JP2020/018778
(87) International publication number: WO 2020/250605

(57) **Abstract**

In order to suppress landing construction, these landing cables, which are installed offshore from a cable landing position, are each provided with: an initially used optical fiber that is used from the initial start of communication by the landing cable; and a preliminary optical fiber which is a preliminary optical fiber in addition to the initially used power feed line used from the initial start, wherein the preliminary optical fiber is connected from a cable landing position side terminal point to boundary points between the cable landing position side terminal point and a cable interval that does not include the preliminary optical fiber, and the terminal point of the preliminary optical fiber, which is the terminal point of the preliminary optical fiber in the boundary points, is held in a state of being usable in the future.

## Description

### [Technical Field]

The present invention relates to an optical communication system using a submarine cable.

### [Background Art]

### <Communication Submarine Cable System and Landing Cable>

A submarine communication cable system is widely used as a means for achieving land-to-land communication across the ocean. A medium that transmits a signal is an optical fiber, and a transmission loss thereof is compensated by an optical amplifier within a repeater, and transmitted. Power that drives the optical amplifier is supplied from land terminal stations on both sides of a cable through a power feed line in the cable.

In construction work of installing a submarine cable, it is common to separate a process of cable landing and a process of offshore installation. A landing cable (Landing cable, ShoreEnd cable) is a name of one section of a submarine cable that is installed in cable landing construction work, and is a submarine cable from a landing position to an offshore construction section.

At the landing position, it is common to install what is called a beach manhole that constitutes a demarcation point. The landing cable is pulled down to the beach manhole and connected to a land cable. The land cable connects the beach manhole and a cable landing station.

### <Difficulties in Cable Landing Construction>

While a demand for a submarine cable continues to grow, landing construction is becoming more difficult, and the cost is getting higher. The following are the main reasons.

### (1) Crowded Submarine Cables

Landing of submarine cables is concentrated on a coast near a major city, and a plurality of submarine cables are pulled into a single cable landing station, and therefore the submarine cables are forced to approach one another, resulting in congestion. When considering repairing a submarine cable, it is necessary to have a certain separation between the submarine cables, however, it becomes difficult when crowded. A crossing between submarine cables also becomes a problem. A cable under a new cable is unable to be retrieved.

### (2) Decreasing Number of Places Suitable for Landing

An ideal landing place for a submarine cable is a shallow beach being not privately owned. In recent years, however, such places have become scarce, and a horizontal directional drilling (HDD) method is used for forming a pipeline under a shoreline. A dedicated excavator is necessary for the HDD method. Since the HDD method has a high risk of failure depending on a geological feature, a route design based on a preliminary boring survey is necessary. Therefore, the HDD method is high cost.

Further, the HDD method may be required for additionally landing a new submarine cable at a place where a simple landing method was able to be applied on a sandy beach in the past, but a seawall has been constructed afterwards, or the like.

### (3) Coordination with Fishers and the like

The sea is a public common space, and it is necessary to obtain consent of fishers and other parties involved in joint use of the construction area for the cable landing. During the cable landing construction period, nets and baskets need to be kept away from an area around the cable route, which restricts fishing. As a result, a period when landing construction work can be performed is often limited to a season when fishing is inactive. Moreover, the construction period is required to be as short as possible.

### (4) Necessity of Cable Protection Construction

In order to prevent damage to the submarine cable being caused by a fishing activity such as bottom trawling and ship anchoring, in shallow sea in a rocky area, it is common to attach a plastic protection tube to the cable, and then bolt the plastic protection tube by a diver. In a case of a sediment bottom, simultaneous installation and burial by a cable installation vessel are generally performed from the landing position to an area of 1000 to 1500 m in depth. Compared to a method of simply placing the submarine cable on the seabed for laying in the sufficiently deep sea, the construction work for laying the landing cable is significantly more labor. As a result, a cost per distance for installing the landing cable is significantly higher than an installation cost in the open sea and the deep sea.

### (5) Natural Environment Protection

Increasingly, a coastal area is being designated as a nature conservation area, and thus it is difficult to obtain a permit for work that changes a landscape even slightly.

### (6) Construction License Regulation Within Territorial Sea

In general, construction work within a territorial sea (12 nautical miles, or about 22.2 km) of each country can be performed by a contractor licensed under a construction business act of the country, and a construction vessel needs to have nationality of the country (Cabotage regulation). Even when the above requirements are met, sometimes a construction permission request does not proceed easily, and thus a serious effect may be caused on an installation plan of the entire cable system. Therefore, when constructing a submarine cable system connecting multiple countries, it is necessary to manage the construction within a territorial sea of each country and the high seas separately and to make contracts with different manufacturers for each landing country. This is also a reason for the high cost.

### <Cable Structure for Meeting a Specific Purpose>

A general submarine cable for optical communication is a complex cable including a plurality of (about 6 to 16) optical fibers and one power feed line. The power feed line is a conductor for supplying power to a submarine repeater and the like. The optical fiber is housed in a pipe-shaped structure in order to protect from high water pressure.

The number of optical fibers per one cable has been generally around 1000 for backbone transmission on land since the 1990s. Meanwhile, for the submarine cable, the optical fiber number is limited mainly for the following two reasons. (1) The number of optical amplification repeaters that compensate for transmission loss of an optical fiber and can be mounted has an upper limit due to a limit of power supply from the cable landing station, and, as a result, there is an upper limit to the number of optical fibers that can be used. (2) There is an upper limit to the number of optical fibers that can be housed inside the pipe-shaped structure.

### <Streaming-Off>

A streaming-off method often used in submarine cable installation construction will be described. The streaming-off is performed when a submarine cable installation vessel needs to temporarily release a cable in the sea, for example. The streaming-off is a method in which a rope containing a wire for cable search (grapnel), an unnecessary submarine cable, or the like is connected to an endpoint of the submarine cable that is a point of restarting construction, and temporarily installed on the seabed in such a way that the cable can be easily recovered when construction is restarted.

In the streaming-off, an endpoint of the submarine cable is sealed watertight by attaching a cap that withstands water pressure, and is connected to a streaming cable. In this connection, optical fibers inside the streaming cable is not connected to optical fibers inside the submarine cable, and only mechanical tensile strength between the streaming cable and the submarine cable is secured.

When the cable is recovered, a small anchor called a grapnel anchor is lowered from a vessel to the seabed, and the anchor is drawn as orthogonally as possible to the cable, and then the streaming cable is hooked and pulled up. When the anchor is hooked at a place being too close to an end of the streaming cable, the streaming cable may slip down due to imbalance in weight of the right side and the left side of the streaming cable during recovery, and therefore, the anchor is hooked at a place being not too close to the end.

A route of temporarily installing the streaming cable is determined in consideration of an area for drawing the grapnel anchor during recovery.

### <Streaming-off of End of Cable That May Be Extended in Future>

The streaming-off has been described above with a case in which the endpoint of the cable during installation is temporarily released from the installation vessel and placed on a seabed. However, the streaming-off is also used in a case in which a submarine cable extending from a device installed on a seabed is left unconnected at a time of installation and is extended or expanded by connecting a submarine cable in the future.

In that case, the real submarine cable extending from the device installed on the seabed has a sufficient length, and a streaming cable to be hooked during recovery is attached to the end of the submarine cable.

Generally, compared to salvaging a submarine cable, salvaging submarine equipment such as a repeater or a branching unit from a seabed is significantly difficult due to the following risks. Submarine equipment is heavy due to a water pressure resistance housing structure thereof. Moreover, the submarine equipment has a special shape compared to a cable, and therefore, it is difficult to recover while winding on a drum like the cable. Therefore, the submarine equipment needs to be pulled up by using a crane in order to be lifted onto a vessel. As a result, a cable before and after the submarine equipment is easily damaged during the process. Therefore, the submarine equipment needs to be designed in such a way that the equipment does not need to be pulled up as much as possible unless the equipment itself breaks. In such a case, the streaming-off is effective and frequently used.

### <Cable Branching Configuration>

Today, a submarine branching unit (BU) that branches a cable and lands to a plurality of destinations is widely used.

There are several types of branching. The types of optical branching include branching per an optical fiber, and branching per a wavelength (group) passing through one optical fiber, and a band distribution and direction thereof can be classified into fixed and variable by remote control.

Power feed line branching including a configuration of grounding at a branching point is more complicated than optical branching, and various types of branching are used.

### <Purpose of Cable Branching>

The following are major two purposes of installing a cable branching unit on a seabed.

### (1) Branching of Communication Route

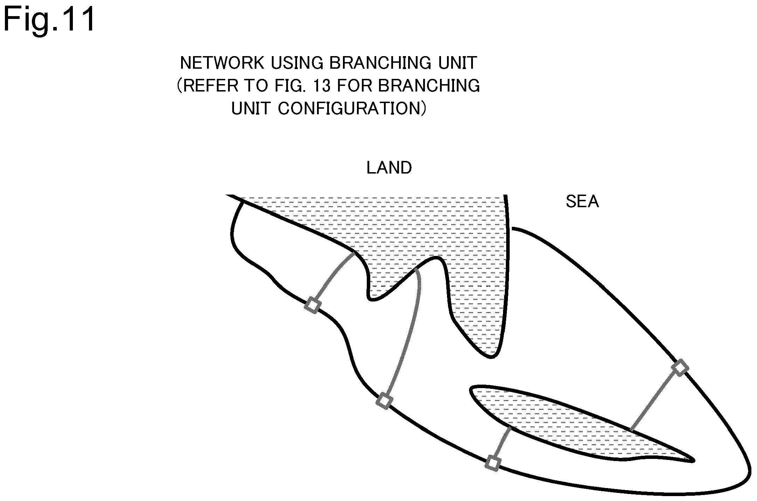

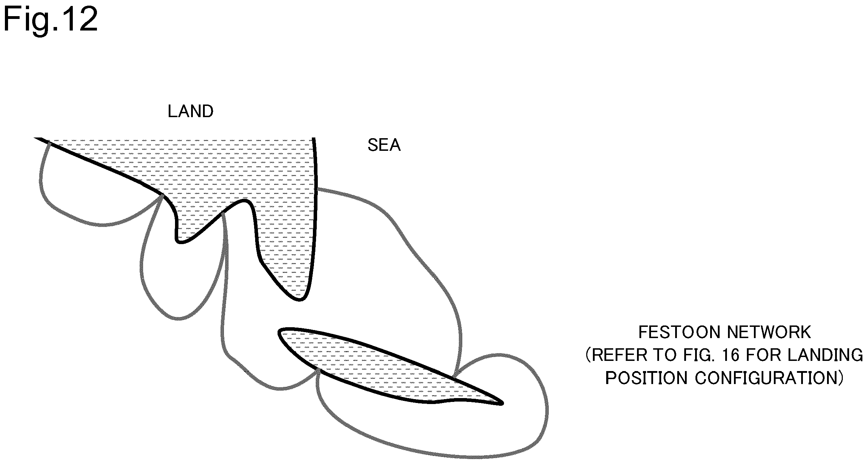

A typical form of a submarine cable network connecting a plurality of landing positions is described with reference to Figs. 11 and 12.

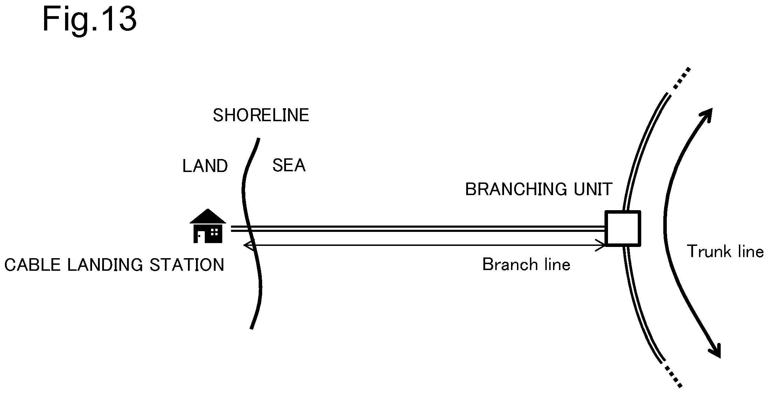

Fig. 11 is a schematic diagram illustrating a form of a network using a submarine branching unit (BU). Each branching unit is illustrated in Fig. 13. Routing is performed at a seabed in different directions, just as vehicles heading for different destinations diverge or merge at a highway interchange. Optical signals are sorted into destinations by an optical fiber in which the signals are flowing, and a wavelength group in wavelength multiplexing.

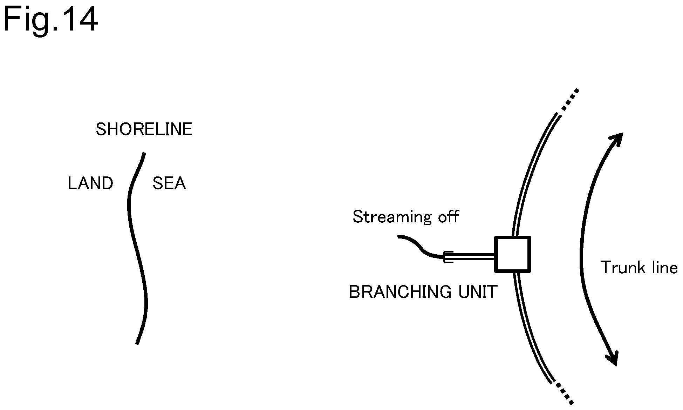

When an additional route is likely to be added in the future, as illustrated in Fig. 14, a method in which a streaming cable is attached to a branch submarine cable extending from a submarine branching unit and is placed on a seabed is also used.

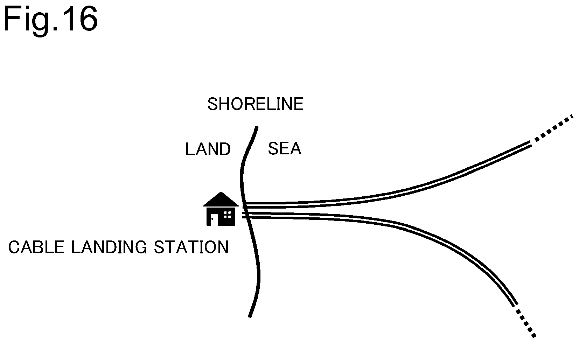

Meanwhile, Fig. 12 is a schematic diagram illustrating a form of a network called Festoon. A branching unit does not need to be laid on a seabed in this form, however, an additional landing cable is necessary. Each landing position has a configuration illustrated in Fig. 16.

These two landing forms are sometimes mixed in a single submarine cable network.

### (2) Improved Fault Tolerance by Route Redundancy

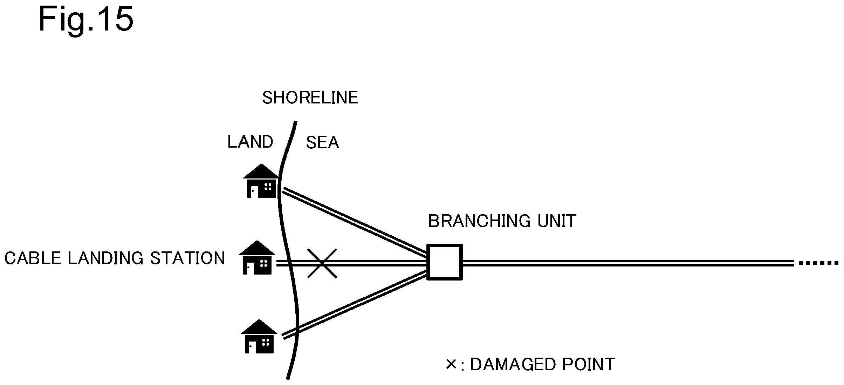

Fig. 15 is a schematic diagram illustrating a configuration of a submarine cable system with a redundant landing cable. PTLs 1 and 2, for example, disclose a technique of having a redundant configuration with a plurality of landing cables because a submarine cable may be easily damaged by a fishing activity or a ship anchor, especially in a shallow sea.

### <Landing of Plurality of Cables without Interruption>

Construction work is sometimes performed for landing a plurality of submarine cables at a single landing position. This is the above-described form of a network called Festoon and is generally used. In this case, a method of landing a first cable, installing offshore, performing streaming-off, and then landing a second cable is used. The streaming-off of the first submarine cable is performed after installing at least to an area where coordination with fishers is not necessary.

Landing without interruption has a great advantage that setting up a heavy machine and the like at the landing position, coordination with fishers, and the like can be done in a single step. However, by landing two submarine cables, the first landing cable needs to be additionally cut, streamed off, retrieved, and connected.

A configuration of the landing position where a plurality of cables are landed is illustrated in Fig. 16.

### <Submarine Cable Connection Technique UJ>

These days, a connection unit of a submarine cable is achieved by a universal joint standardized and supplied by the Universal Jointing (UJ) consortium being an industry organization or by a joint with a similar configuration. A universal joint refers to a universal coupling, however, in this description, UJ is a name given by the UJ consortium and does not refer to a universal coupling.

Main requirements for the connection unit are (1) connection among optical fibers and among power feed lines, (2) electrical insulation, (3) water pressure resistance, and (4) tensile strength equivalent to that of a cable. In order to achieve the above requirements, various efforts have been made. Optical fibers are fusion spliced, and reinforcement sleeves thereof and optical fiber slack are rolled and housed in the center. The entire core portion of the connection is molded with polyethylene (hereinafter abbreviated as PE) for providing insulation. The mold allows the connection unit to be compact, like a bump in the middle of the cable, and allows the connection unit to be rolled together with the submarine cable.

The UJ consortium also certifies qualification of a connection technician, and a qualified person called UJ Jointer is on board an installation vessel with a connection jig in such a way as to ensure highquality submarine cable connection even at sea.

### <Cable Coupling>

A device on which an electric circuit is mounted, such as an optical amplification repeater, is housed in a metal pressure-resistance container that can dissipate heat, covered with a pressure-resistance lid, and sealed by welding before shipping from a factory. A so-called cable coupling unit is used for the connection unit between such a device and the submarine cable. The configuration is described in NPL 1, for example.

A core portion of the cable coupling unit has a similar configuration to the UJ Joint, and the basic difference is that the optical wiring is a so-called tail cable. The tail cable is described on pp. 123 and 129 in NPL 1.

The tail cable is a flexible wire made by combining an optical fiber wire and a power feed line in such a way as to withstand high water pressure at deep sea. Since this wire is used for wiring inside a housing structure (but outside the pressure-resistance container), tensile strength is not necessary. An end of the tail cable on a side of the pressure-resistance container is integrated with a component called feedthrough, and the optical fiber and the power feed line are connected to inside of the housing via the feedthrough. The feedthrough has an ability to prevent water from entering the housing even when water happens to enter the tail cable.

An end of the tail cable on a side of the coupling unit has an integrated metal fitting called a chip, which functions similarly to the feedthrough, and the optical fiber and the power feed line are connected to the center of the coupling unit via the chip.

The core portion of the connection and the chip are PE-molded together and achieve electric insulation. As described above, the PE-molded connection core portions of the cable coupling and the UJ have a shape like a cocoon.

Connection work of the cable coupling is performed at a submarine cable factory before mounting onto an installation vessel. The cable coupling is not standardized in the industry and is based on a manufacturerspecific specification because cable the coupling does not need to be connected on a vessel.

### <Tensile Wire Retaining Unit>

A load of suspending several thousands of meters of a submarine cable and submarine equipment from the installation vessel on the sea surface to the seabed becomes several tons, and therefore, the tensile strength of the submarine cable is strictly specified, designed, and manufactured. Therefore, the cable connection unit needs to have the equivalent tensile strength. The cable includes a tensile wire that achieves the tensile strength. The connection unit needs to have a tensile wire retaining unit having a structure that firmly retains the tensile wire. The tensile wire retaining unit is described on pp. 89 and 129 in NPL 1.

The basic structure is that the tensile wire in the cable is broken up and spread out, and then the broken up tensile wire is clamped between a funnel-shaped metal fitting and a pin pushed into the metal fitting. The retaining units exist on both sides of the cable connection unit and are firmly connected to the connection unit construction body. This configuration achieves tensile strength that is comparable to the cable itself.

In the aforementioned UJ, the entire core portion including the tensile wire retaining unit is molded with PE.

Submarine cables include a basic structure cable and an armored cable that has an outer armoring wire wrapped around the basic structure cable for protection. There are various types of armor depending on a degree of protection. The tensile wire described above is inside an armorless cable, however, connecting an armored cable needs retaining the outer armoring wire and is achieved by a similar configuration.

### <Development and Obsolescence of Submarine Communication Cable>

Next, technical progress and associated technical obsolescence of a submarine communication cable are described. Especially in the field of communication equipment, the technical progress and technical obsolescence are known to be rapid. A communication submarine cable has been continually developed after transferring from coaxial cable to optical fiber cable, and the submarine cable system that is installed and in operation continues to perform inferiorly compared to the latest type.

Nowadays, optical fiber transmission using a wavelength multiplexing technique is commonly used in a backbone transmission path. One feature of the wavelength multiplexing technique is that an overall transmission capacity can be increased according to an increase in demand by adding or updating optical transmitters/receivers on both sides of the cable. Even with such extensibility, expansion is becoming technically more difficult, and a transition from an old cable system to a new cable system continues. The following are the reasons. (1) Optical characteristic of the optical fiber. As a modulation speed of a transmission signal is increased, a requirement for optical characteristics, especially chromatic dispersion and polarization mode dispersion, becomes increasingly strict, and a restriction is placed in a direction of increasing a transmission speed. (2) Band of the optical amplification repeater and the number of optical fibers that can be amplified. As the technique progresses, an amplification band becomes even wider, and the number of optical fibers that can be amplified is increasing because of increased power efficiency, and thus a repeater manufactured years ago has inferior performance compared to the latest type. However, a trans-pacific communication cable has more than 200 repeaters connected in a row for example, and it is not economically feasible to replace the large number of repeaters with the latest model at sea, and therefore, a new communication cable system is being selected to be installed.

### <Recent Obsolescence of Communication Submarine Cables>

Following is an additional explanation of a tendency of technical obsolescence of a communication submarine cable especially in recent years. As for the optical fiber characteristics (chromatic dispersion and polarization mode dispersion), which has been one of reasons for technical obsolescence, a digital coherent technique that was practically introduced at the beginning of the 2010s dramatically eases conditions. The digital coherent technique has made practical equalization of an analog/digital converted signal waveform by real-time arithmetic processing. As a result, even a slightly old optical fiber cable can now be used as a transmission line for latest high-capacity transmission without difficulty.

Meanwhile, parts other than the optical fiber, such as an optical amplification repeater and a submarine branching unit, are technically progressing significantly, and a tendency continues that the performance becomes inferior as time passes.

As a result, As far as submarine cable is concerned, a rate of technical obsolescence is slow, and it is becoming possible to use as a part of a latest communication system even after many years. Especially, reuse of the landing cable that is expensive to install and whose authorization acquisition is difficult is highly meaningful.

### <Installing Plurality of Landing Cables>

In the past, a plurality of cables have been landed on a single point in Festoon configuration. However, installing a landing cable for future expansion in advance, like a long streaming cable, has rarely been done because of uncertainty of cost reduction effect despite the large expense involved.

However, in recent years, as mentioned in the beginning, the construction of installing a landing cable tends to become difficult, and a period and an expense of the zone are increasing, and thus, when the cable is less likely to deteriorate and become technically obsolete, an economic benefit can be expected.

### [Citation List]

### [Patent Literature]

[PTL 1] Japanese Patent No. 4526168
[PTL 2] United States Patent No. 6731879
[PTL 3] Japanese Unexamined Patent Application Publication No. H07-087013
[PTL 4] Japanese Unexamined Patent Application Publication No. 2002-124141

### [Non Patent Literature]

[NPL 1] "Optical Submarine Cable Communication" Supervised by Noboru Ohyama and Moriji Kuwabara, Published by KDD Engineering and Consulting, Inc. (1991)

### [Summary of Invention]

### [Technical Problem]

In recent years, cable landing construction is becoming more and more difficult, as described at the beginning of the Background Art section. In order to solve this problem, reducing a number of cable landing construction activities is effective. And, for this purpose, installing a landing cable that has spare capacity for future expansion is effective.

However, it has been economically and technically difficult to install a submarine cable system having a very large number of optical fibers for future extension. A cable system including a large number of optical fibers is naturally expensive, and therefore, an initial capital investment is limited to an area with a specific expansion plan. As a technical reason, when the number of optical fibers is increased, the number of optical amplification repeaters needs to be increased, however, since there is a limit to power that can be supplied from the land via a power feed line, there is a limit to the number of optical fibers that can amplify.

A purpose of the present invention is to provide a landing cable and the like that are able to suppress occurrence of landing construction.

### [Solution to Problem]

A landing cable according to the present invention is a landing cable to be installed offshore from a cable landing position, and includes a preliminary optical fiber that is a preliminary optical fiber in addition to an initially used optical fiber being an optical fiber used since start of communication by the landing cable and an initially used power feed line being a power feed line initially used from the start, in which the preliminary optical fiber connects an end on a side of the cable landing position and a boundary point with a district of a cable not including the preliminary optical fiber, and a preliminary optical fiber endpoint being an endpoint of the preliminary optical fiber is maintained in a future usable state at the boundary point.

### [Advantageous Effects of Invention]

The landing cable and the like according to the present invention are able to suppress occurrence of landing construction.

### [Brief Description of Drawings]

Fig. 1 is a schematic diagram illustrating a configuration example of a submarine cable system according to the first example embodiment.
Fig. 2 is a schematic diagram illustrating a configuration example of a cable coupling unit on the landward side of a first repeater according to the first example embodiment.
Fig. 3 is a schematic diagram illustrating a configuration example of a submarine cable system according to the second example embodiment.
Fig. 4 is a schematic diagram illustrating a first configuration example of a landing cable according to the second example embodiment.
Fig. 5 is a schematic diagram illustrating a second configuration example of a landing cable according to the second example embodiment.
Fig. 6 is a schematic sectional diagram illustrating a third configuration example of a landing cable according to the second example embodiment.
Fig. 7 is a schematic diagram illustrating a first configuration example of a branching unit according to the second example embodiment.
Fig. 8 is a schematic diagram illustrating a second configuration example of a branching unit according to the second example embodiment.
Fig. 9 is a schematic diagram illustrating a third configuration example of a branching unit according to the second example embodiment.
Fig. 10 is a schematic connection diagram illustrating a configuration example of a submarine cable system according to the example embodiment with optical fiber sensing application.
Fig. 11 is a diagram illustrating a form of a submarine network using a cable branching unit.
Fig. 12 is a diagram illustrating a form of a submarine network called Festoon.
Fig. 13 is a diagram illustrating a usage example of the submarine branching unit.
Fig. 14 is a diagram illustrating a method of preliminarily installing a streaming cable to be connected to the submarine branching unit and the landing cable.
Fig. 15 is a diagram illustrating an example of an ordinary technique for making redundant a landing cable.
Fig. 16 is a diagram illustrating an ordinary technique of landing a plurality of submarine cables.
Fig. 17 is a schematic diagram illustrating a minimum configuration of a landing cable according to the example embodiment.

### [Example Embodiment]

The following example embodiments describe an example of a landing cable used for a submarine optical transmission system (submarine cable system) realizing a communication line to a foreign country across the sea.

### <First Example Embodiment>

In the submarine cable system according to the present example embodiment, a preliminary optical fiber for extension (preliminary optical fiber) is provided within a landing cable. The preliminary optical fiber is provided assuming more optical fibers are used in the future in the submarine cable beyond (offshore side) a cable boundary point. By providing the preliminary optical fiber, when the number of the optical fibers to use increases in the future, the installed landing cable can be continually used. Therefore, the submarine cable system of the present example embodiment has the effect of suppressing the occurrence of cable landing construction.

### [Configuration and Operation]

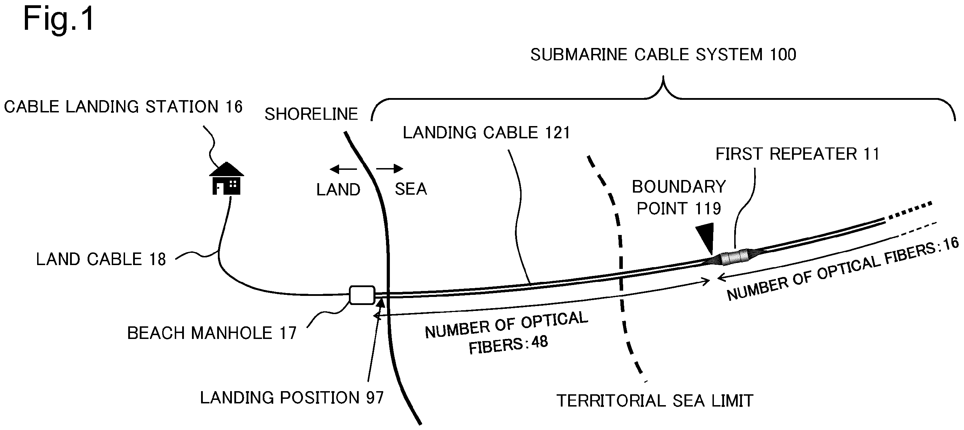

Fig. 1 is a schematic diagram illustrating a configuration of a submarine cable system 100 that is an example of the submarine cable system according to the present example embodiment. The submarine cable system 100 connects a cable landing station 16 to an opposing cable landing station that is not illustrated via the seabed. The landing cable 121 is a part of the submarine cable system 100 and is a submarine cable that lands to the cable landing station 16 via the land cable 18.

The configuration around the landing position 97 is described in detail. At the landing position 97, a beach manhole 17 that forms a demarcation point is installed. The landing cable 121 and the land cable 18 are connected at the beach manhole 17. The landing cable 121 may be directly pulled to the cable landing station 16, not via the land cable 18. However, since the landing cable is made firmly and lacking flexibility, it is difficult to maneuver. Therefore, generally, the land cable 18 that is flexible connects the land district.

The first repeater 11 is the first repeater when tracing the landing cable 121 from the landing position 97 to the offshore. There is a case that submarine equipment such as the BU explained in the Background Art section appears earlier than the repeater, however, the submarine equipment is included in the first repeater described here.

The landing cable 121 includes an optical fiber including 48 optical fibers that are not illustrated and a power feed line. The power feed line is for supplying power to the repeater within the submarine cable system 100 including the first repeater 11. The 16 optical fibers of the aforementioned 48 are used for communication with another country since the start of the communication by the submarine cable system 100. The remaining 32 optical fibers are not used at the beginning and are the preliminary optical fibers for extension when the number of optical fibers to use increases in the future.

At an endpoint of the landing cable 121 on the landward side, at least 16 optical fibers that are initially used are led to the cable landing station 16 via the land cable 18 along with the power feed line. These are connected to communication equipment that is not illustrated and installed in the cable landing station 16. All or some of the endpoints of the 32 preliminary optical fibers for extension are stored in the beach manhole 17 at the landing position or introduced to the cable landing station 16 via the land cable 18 and are stored in the cable landing station 16.

The 32 preliminary optical fibers for extension are connected to the boundary point 119 in the sea through the landing cable 121. In the present example embodiment, as described later, the boundary point 119 is set within the cable coupling on the side of the landing position of the first repeater 11. In other words, the preliminary optical fiber is not led to the inside of the main body of the first repeater where the optical amplification is performed, and not connected to the submarine cable beyond.

The boundary point 119 is set outside the territorial sea limit (12 nautical miles (22.2 km) from the coast). The distance from the shoreline to the first repeater 11 is generally 30 to 50 km, so the repeater can be expected to be beyond the territorial sea limit. Therefore, the boundary point 119 is desirable to be set around the first repeater 11.

The boundary point 119 is set in one of the area exceeding a zone in which a cable burial method is necessary, an area exceeding a zone in which HDD method is necessary, and an area exceeding a zone in which an authorization acquisition of installation operation is necessary.

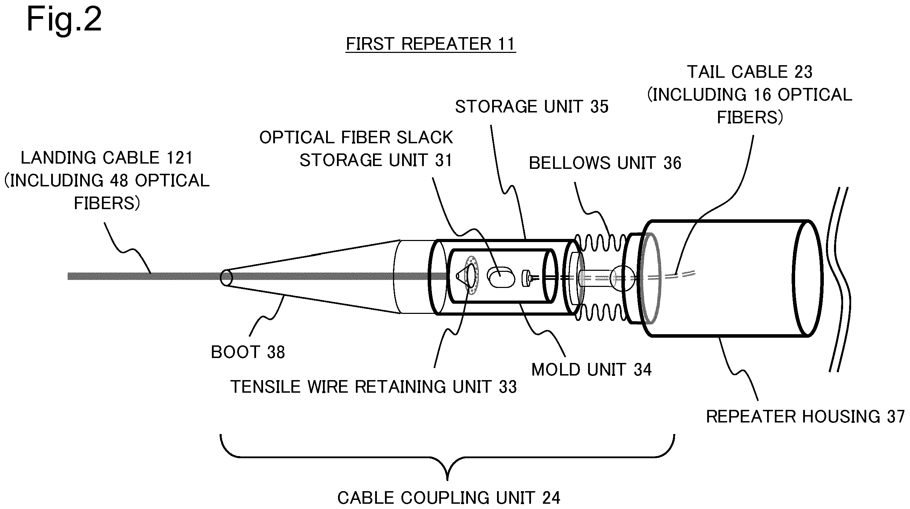

Fig. 2 is a schematic diagram illustrating a configuration example of the first repeater 11 illustrated in Fig. 1. Hereinafter, a configuration of a general repeater is described. Then, an implementation configuration of one that configures the boundary point 119 in the present example embodiment is described.

The first repeater 11 includes a cable coupling unit 24 on the landward side, a repeater housing 37, and a cable coupling unit on the offshore side that is not illustrated. The cable coupling unit 24 includes a boot 38, a storage unit 35, and a bellows unit 36. The offshore side cable coupling unit includes similar components.

The boot 38 is a cone-shaped member that protects the proximity of the cable connection. The bellows unit 36 is bellows-shaped and allows the relative angle between a main body of the cable coupling unit and the repeater housing 37 to be changed.

The storage unit 35 includes a mold unit 34. The mold unit 34 is a PE mold, for example. Molding with PE secures electrical insulation.

The mold unit 34 includes a tensile wire retaining unit 33 and an optical fiber slack storage unit 31 inside. The landing cable 121 is fixed inside the mold unit 34 by the tensile wire retaining unit 33. The optical fiber within the landing cable 121 and the tail cable 23 extending from inside the repeater housing 37 are fused together and housed in the mold unit 34. The above configuration is also described in the Background Art section.

The implementation configuration of the boundary point 119 illustrated in Fig. 1 according to the present example embodiment is described. The implementation configuration is, briefly, to store the endpoint of the preliminary optical fiber that is connected from the landing position 97 inside the mold unit in a rolled state, for example.

The landing cable 121 is the same as the one illustrated in Fig. 1 and includes 48 optical fibers and a power feed line. Although not illustrated in the diagram, the 48 optical fibers are exposed to the right side for a predetermined length from an endpoint fixed to the tensile wire retaining unit 33 of the landing cable 121.

The 16 optical fibers that are initially used since the start of the communication of the 48 optical fibers are connected to the tail cable 23 and further connected to the optical fibers of the submarine cable leading further offshore via the optical amplifier that is not illustrated inside the repeater housing 37. On the other hand, the 32 preliminary optical fibers of the 48 optical fibers are stored in the optical fiber slack storage unit 31 by rolling, for example. These 32 preliminary optical fibers may be configured with loopback connections between 16 pairs of optical fibers. As a result, the number of executing a test of monitoring conduction of these 32 preliminary optical fibers from shore can be half of the number required when no loopback connection is made. Therefore, the conduction monitoring of the 32 preliminary optical fibers from shore becomes easy.

In the above description, the number of all the optical fibers included by the landing cable was 48, the number of optical fibers used from the start of the communication (initially used optical fibers) was 16, and the number of preliminary optical fibers was 32. However, the number of all the optical fibers, the number of initially used optical fibers, and the number of preliminary optical fibers included in the landing cable according to the present example embodiment are not limited to these numbers.

### [Effect]

The landing cable of the present example embodiment includes a preliminary optical fiber. The preliminary optical fiber is preliminarily included in the landing cable to be installed in consideration of a case in which the number of the optical fibers used increases because of the future update of the submarine cable beyond the boundary point. When the number of optical fibers used increases, by using the preliminary optical fibers, the occurrence of cable landing cable construction can be suppressed.

Here, a supplementary explanation is provided on when the expansion to increase the number of optical fibers used (used optical fiber number) is performed in a submarine cable. There are two main reasons why the number of used optical fibers at the time of installing the cable is less than the maximum number of optical fibers that can be housed in the cable. One case is that there is a limit in the power supplied to the amplifying repeater. Since there is an upper limit in the power supplied to the submarine cable from the cable landing station, the power that can be consumed by one amplifying repeater has a limit. An amplifying repeater for each optical fiber is accommodated in the main body of the amplifying repeater, and when the number of optical fibers increases, the number of amplifiers increases, the power requirement increases. Therefore, when the power limit per one repeater is tight, there will be an upper limit to the number of optical fibers that can be amplified. The other case is that, at the time of installation, the maximum number of optical fibers that can be housed is not required when predicting future increases in communication demand. In this case, a smaller number of optical fibers than the maximum number of optical fibers that can be housed is selected in order to invest the minimum required.

In the former case, suppose that a future technical improvement improves energy conversion efficiency of an optical amplifier in a repeater and reduces the power required for optical amplification per one optical fiber. In this case, in the landing cable of the present example embodiment, using the already installed preliminary optical fiber, the number of optical fibers to be used can be increased without updating the landing cable.

In the latter case, suppose that the communication demand increases more rapidly than predicted. In this case, the number of optical fibers will be insufficient, and the submarine communication system including the landing cable will be upgraded. However, even in such a case, the landing cable according to the present example embodiment can be reused as a communication line for a new communication route where the communication counterpart is changed from the original communication counterpart.

Even with the landing cable according to the present example embodiment, when increasing the number of optical fibers used in the submarine cable, installation construction for updating the submarine cable and the repeater beyond the boundary point needs to be performed again. However, when the landing cable according to the present example embodiment is used, a preliminary optical fiber is preliminarily included in the landing cable. Therefore, the landing cable according to the present example embodiment can be used as a part of the new optical submarine cable system without installing a new landing cable.

A boundary point that is an offshore side endpoint of the preliminary optical fiber is set outside the territorial sea limit, in other words, the high seas. As described partially in the Background Art section, each country has implemented licensing laws for civil engineering and construction. The licensing system applies to a territorial sea under the sovereignty of the country. Therefore, construction work inside the territorial sea must be carried out by a contractor with a civil engineering and construction license from the country. The construction work inside the territorial sea is an economic activity within the country, so it must comply with the taxation system of the country. As a result, construction work inside the territorial sea takes effort and cost, and it is preferable to be avoided if possible. On the contrary, the law of the country is generally not in effect outside of the territorial sea. Therefore, the benefit of reducing labor and cost may be obtained by preliminarily installing a preliminary optical fiber to the outside of the territorial sea.

The boundary point is set in an area exceeding a zone in which cable burial method and horizontal directional drilling method are necessary. Since the cable burial method buries a submarine cable, it costs more than a method where the submarine cable is simply laid on the seabed. The horizontal directional drilling method is even more costly because a dedicated excavator and route designing based on a preliminary boring survey are necessary, as described in the Background Art section. When the boundary point is set in an area exceeding a zone in which cable burial method and horizontal directional drilling method are necessary, a method of simply laying on the seabed can be applied, so the benefit of reducing cost may be obtained.

The boundary point is also set in an area outside a zone in which authorization acquisition of the installation operation is necessary. As a result, even in a case in which the law of the country is applicable outside the territorial sea, the authorization acquisition becomes unnecessary, and the benefit of reducing labor and cost may be obtained.

The example where the boundary point is arranged within the cable coupling unit on the landward side of the first repeater has been described, however, the position of the boundary point is not limited to be within the cable coupling unit. For example, a boundary point may be set inside the submarine cable connection unit arranged between the shoreline and the first repeater. However, it is desirable that the preliminary optical fiber is connected as close to the first repeater as possible since it is only up to the relevant connection unit that can be reused when increasing the number of optical fibers used.

The boundary point may be set offshore than the first repeater. In this case, the first repeater also needs to include an optical amplifier for the preliminary optical fiber. As a result, the price of the first repeater increases because of becoming a special product with different specification from many other repeaters. In a submarine cable system, in order to speed up failure recovery, a preliminary product (preliminary equipment) for repairing a repeater and a submarine cable that takes a long time to manufacture are stored in a warehouse on land and are shipped for repair work. The preliminary equipment needs to be prepared for each type of repeaters, so when the number of types increases, the cost of manufacturing and storing the preliminary equipment also increases.

### <Second Example Embodiment>

The landing cable according to the first example embodiment includes only preliminary optical fibers for the future extension but does not include a preliminary power feed line (preliminary power feed line). Therefore, with the landing cable according to the first example embodiment, a new submarine cable cannot be added to the landing cable.

On the contrary, the landing cable according to the second example embodiment has a single landing cable, so the landing construction work can be performed only once. Nevertheless, the landing cable according to the present example embodiment includes a configuration in which a preliminary branch submarine cable for connecting a new submarine cable is preliminarily installed on the seabed. Here, the branch submarine cable refers to a branched submarine cable. Therefore, the landing cable according to the present example embodiment may have the effect of suppressing the occurrence of cable landing construction when adding a new submarine cable in the future.

### [Configuration and Operation]

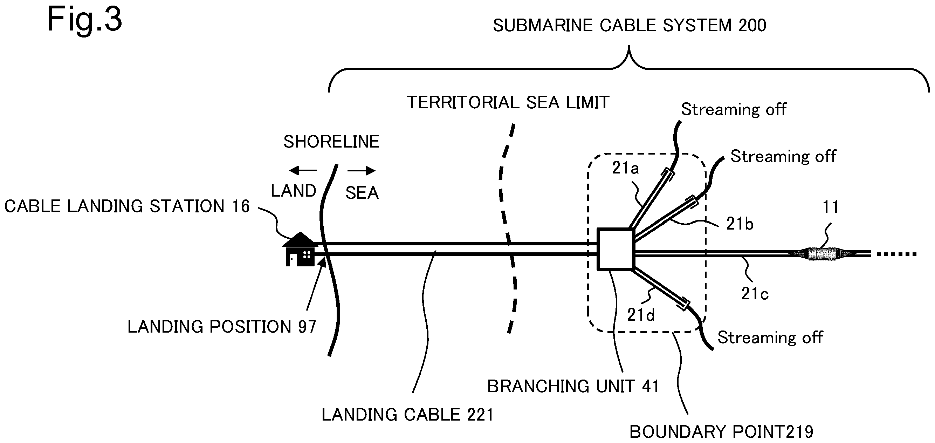

Fig. 3 is a schematic diagram illustrating a configuration of a submarine cable system 200 that is an example of the submarine cable system according to the present example embodiment. The landing cable 221 of the submarine cable system 200 includes a preliminary optical fiber and a preliminary power feed line that are not used initially. The preliminary optical fiber is branched at a branching unit 41, and endpoints of the branched optical fiber and the preliminary power feed line configure a boundary point 219.

The landing cable 221 includes an optical fiber including optical fibers whose number is equivalent to the total of the number of optical fibers included in the four branch submarine cables 21a to 21d, and power feed lines whose number is equivalent to the number of power feed lines included in each branch submarine cable. The landing cable 221 is a single landing cable. The number of optical fibers distributed to each branch submarine cable is not fixed, however, an example in which the number is 16 is described here.

At an endpoint of the landing cable 221 on the landward side, at least 16 optical fibers that are used since the start of the communication by the landing cable 221 are led to the cable landing station 16, via a land cable for example, along with the power feed line used since the start of the communication. These are connected to communication equipment that is not illustrated and installed in the cable landing station 16. At the endpoint, all or some of the landward side endpoints of the preliminary optical fibers and power feed lines for an extension for connecting a new submarine cable on the offshore side are stored in the beach manhole at the landing position or introduced to the cable landing station 16 and are stored.

The branching unit 41 branches the optical fiber group and the power feed line included by the landing cable 221 into each branch submarine cable.

The boundary point 219, which is a boundary between a cable district including a preliminary optical fiber and a preliminary power feed line and a district not including them, is configured with a branching unit 41 and branch submarine cables 21a to 21d in the present example embodiment. However, a boundary point in the narrow sense is configured by the branching unit 41.

Only the branch submarine cable 21c among the branch submarine cables is used since the start of communication by the submarine cable system 200. The first repeater 11 is a general product similar to many other repeaters within the submarine cable system 200, and the number of optical fibers before and after the repeater is similar to other repeaters.

The branch submarine cables 21a, 21b, and 21d are preliminary for extension and are not used initially. The offshore side endpoints of the branch submarine cables 21a, 21b, and 21d are sealed watertight and streaming-off is performed. The streaming-off is a method in which a streaming cable is mechanically attached to an endpoint of a submarine cable which is the construction resuming point and installed on the seabed in order to be easily recovered when resuming, as described in the Background Art section. An optical fiber or a power feed line is not connected.

Although not illustrated, the branch submarine cable 21c is connected to another country via a plurality of repeaters beyond. Communication between the home country and another country is performed using the optical fiber included in the branch submarine cable 21c.

The branching unit 41 and the branch submarine cables 21a to 21d configuring the boundary point 219 are naturally set between the shoreline and the first repeater 11.

The branching unit 41 and the branch submarine cables 21a to 21d configuring the boundary point 219 are also set outside the territorial sea limit, in other words, the high seas. As described partially in the Background Art section, each country has implemented licensing laws for civil engineering and construction. The licensing system applies to a territorial sea under the sovereignty of the country. Therefore, construction work inside the territorial sea must be carried out by a contractor with a civil engineering and construction license from the country. The construction work inside the territorial sea is an economic activity within the country, so it must comply with the taxation system of the country. As a result, construction work inside the territorial sea takes effort and cost, and it is preferable to be avoided if possible. On the contrary, the law of the country is generally not in effect outside of the territorial sea. Therefore, the benefit of reducing labor and cost may be obtained by setting the boundary point 219 outside of the territorial sea.

The branching unit 41 and branch submarine cables 21a to 21d that configure the boundary point 219 are set in an area exceeding a zone in which cable burial method and horizontal directional drilling method are necessary. Since the cable burial method buries a submarine cable, it costs more than a method where the submarine cable is simply laid on the seabed. The horizontal directional drilling method is even more costly because a dedicated excavator and route designing based on a preliminary boring survey are necessary, as described in the Background Art section. When the boundary point 219 is set in an area exceeding a zone in which cable burial method and horizontal directional drilling method are necessary, a method of simply laying on the seabed can be applied, so the benefit of reducing cost may be obtained.

The branching unit 41 and branch submarine cables 21a to 21d that configure the boundary point 219 are also installed in an area exceeding a zone in which authorization acquisition of the installation operation is necessary. As a result, even in a case in which the law of the country is applicable outside the territorial sea, the authorization acquisition becomes unnecessary, and the benefit of reducing labor and cost may be obtained.

A configuration example of the landing cable 221 illustrated in Fig. 3 is described.

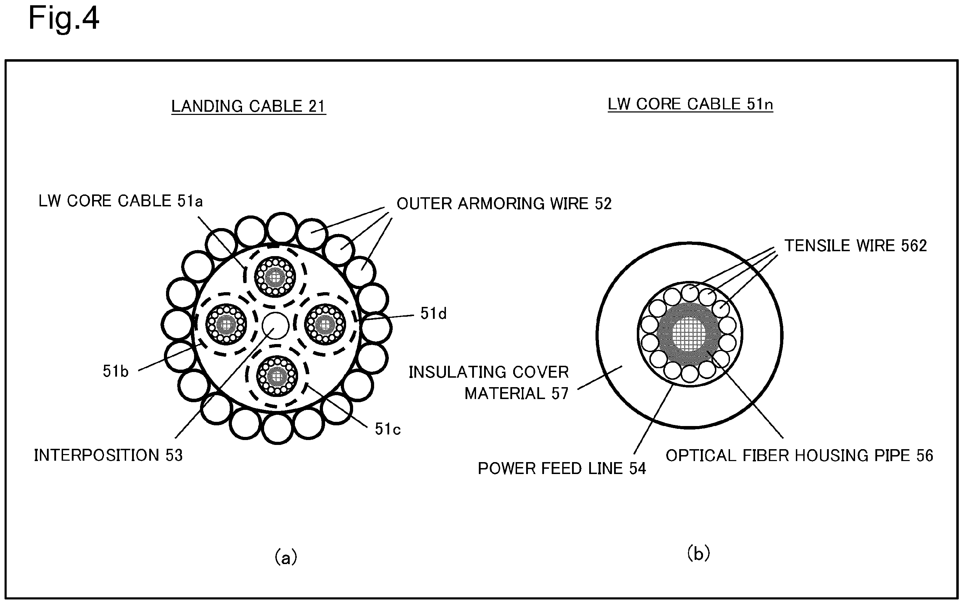

Fig. 4 is a schematic diagram illustrating the landing cable 21 that is the first configuration example of a landing cable 221 of Fig. 3. The landing cable 21 illustrated in Fig. 4 is a bundle of a plurality of smallest basic units of submarine cables, called Light Weight (LW) core cables, with an outer armorng. Hereinafter, an LW core cable may be abbreviated as an LW core. Fig. 4 (a) is a sectional diagram of the landing cable 21. Fig. 4 (b) is a sectional diagram of an LW core cable 51n that is a configuration example of the LW core cables 51a to 51d illustrated in Fig. 4 (a).

An outer armoring wire 52 of the landing cable 21 illustrated in Fig. 4 is for protecting the cable from fishing activity in shallow water, ship anchoring, and contact with cable burial machinery during a landing operation.

The landing cable 21 has a configuration in which four LW core cables 51a to 51d are loosely wound around an interposition 53 in the center and filled with inclusion such as resin.

The LW core cable 51n illustrated in Fig. 4 (b) is a basic unit of a general submarine cable. As illustrated in Fig. 4 (b), the LW core cable 51n includes an optical fiber housing pipe 56, a plurality of tensile wires 562 disposed to surround them, and a power feed line 54 further covering the outside, and the outside is covered with an insulating cover material 57. The tensile wire 562 is a steel wire that retains and resists when tension is applied to the cable. The optical fiber housing pipe 56 is a rigid steel pipe that withstands water pressure on the optical fiber and houses the optical fiber.

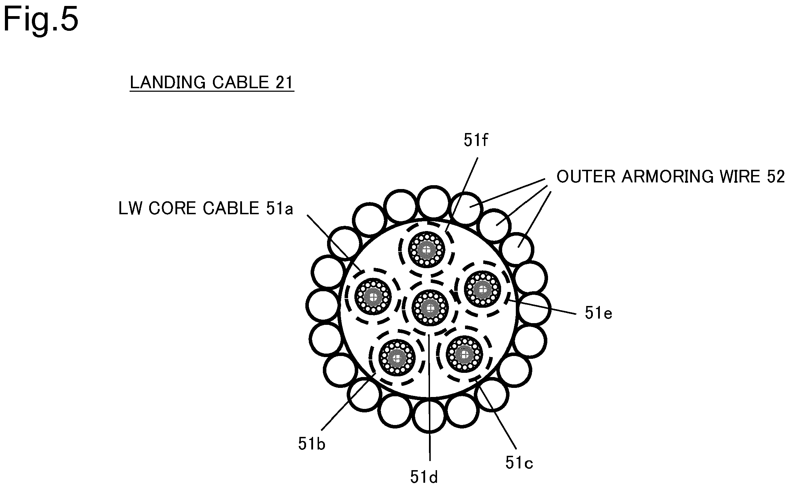

The number of LW core cables induced in the landing cable 21 is free. Fig. 5 is a schematic diagram illustrating a cross-section of the landing cable 21 including six LW core cables 51a to 51f that is the second configuration example of a landing cable 221 of Fig. 3. Each LW core cable has a similar configuration to the LW core cable 51n illustrated in Fig. 4 (b).

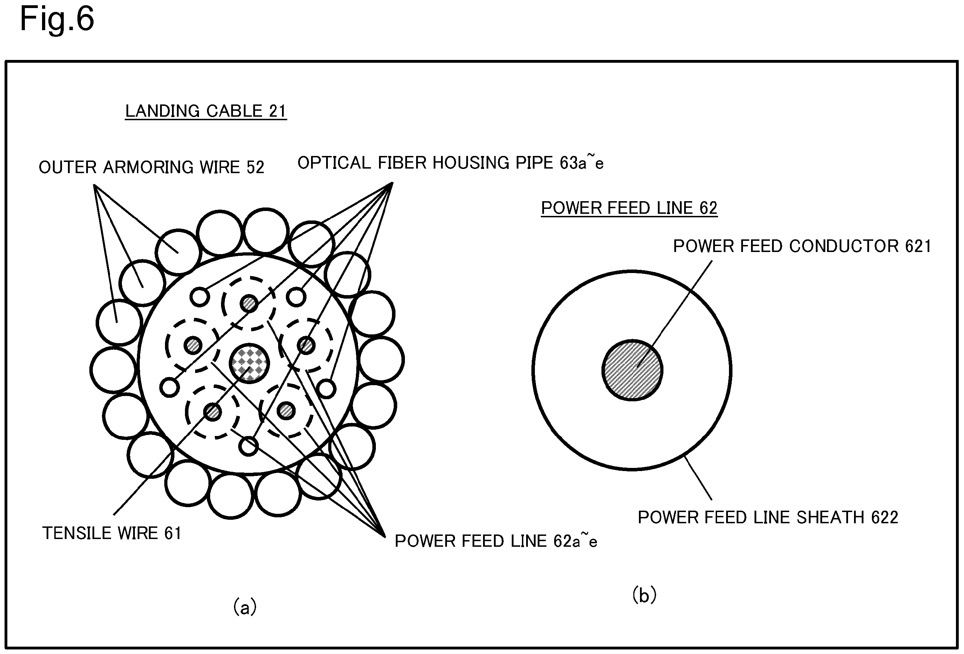

Fig. 6 is a cross-sectional schematic diagram illustrating the landing cable 21 that is the third configuration example of the landing cable 221 illustrated in Fig. 3. The landing cable 21 illustrated in Fig. 6 is configured as a single cable, unlike the first and second configuration examples that are the collection of basic unit configuration (LW core) of submarine cables. Fig. 6 (a) is a sectional diagram of the landing cable 21 and Fig. 6 (b) is a sectional diagram illustrating a power feed line 62 that is a configuration example of each power feed line illustrated in Fig. 6 (a).

The landing cable 21 illustrated in Fig. 6 has a tensile wire 61 in the center that is surrounded by insulated and covered power feed lines 62a to 62e in concentric circles. The landing cable 21 is further arranged with optical fiber housing pipes 63a to 63e in a valley where the power feed lines meet each other, and the structure up to this point is resin-molded. The landing cable 21 is further wound with outer armoring wire 52 for protection on the outside.

The tensile wire 58 is for achieving the tension performance of the cable and is a central interposition at the time of manufacturing the cable. As illustrated in Fig. 6 (b), the power feed line 62 is power supply conductor 621 wrapped with power feed line sheath 622 that is an insulating material such as resin. The optical fiber housing pipe 63 does not need to be rigid as the one used for the LW core cable. The configuration illustrated in Fig. 6 includes optical fiber housing pipes for the number of branches. However, the optical fibers may be grouped and placed in a single pipe. In this case, in the branching unit described later, the distribution of the optical fibers needs to be carried out without a mistake. The outer armoring wire 52 is similar to the ones illustrated in Fig. 4 and Fig. 5.

Since the above-described first and second configuration examples are a collection of LW core cables, when the landing cable 21 is disassembled to LW cores, the advantage is that the connection technique with general connection parts can be used, however, the disadvantage is that the cable becomes thicker. On the contrary, the third configuration can be optimally designed as a dedicated landing cable specialized for shallow sea, which can relax the specification values of tensile strength and water pressure, thus simplifying the structure, and is expected to have an advantage such as thinner diameter and lighter weight, but has a disadvantage of requiring a dedicated connection part.

A configuration example of the branching unit 41 illustrated in Fig. 3 is described. The branching unit 41 illustrated in Fig. 3 is described with an example with 4 branches, however, in the description below, an example of 3 branches is described to avoid complexity of the diagram.

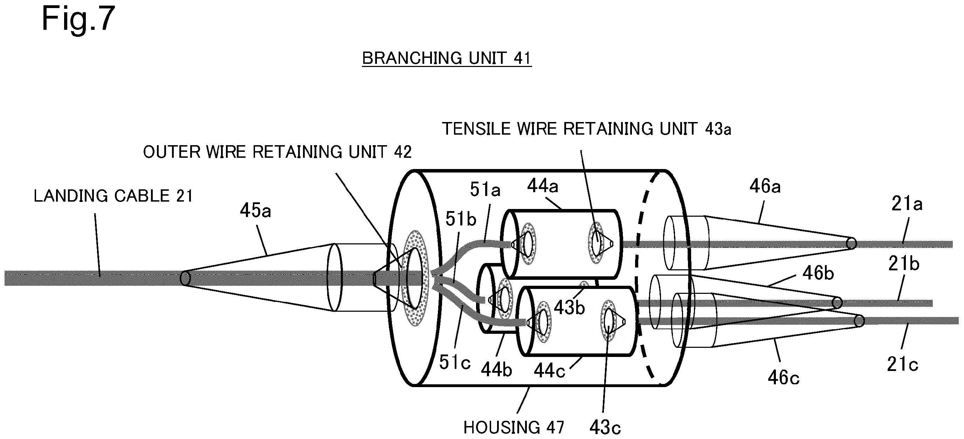

Fig. 7 is a schematic diagram illustrating a first configuration example of the branching unit 41. The branching unit 41 illustrated in Fig. 7 is used when the landing cable 21 is a collection of LW cables, as in the configurations illustrated in Fig. 4 and Fig. 5.

The branching unit 41 illustrated in Fig. 7 includes boots 45a and 46a to 46c and a housing 47. The housing 47 includes an outer wire retaining unit 42 and mold units 44a to 44c. The mold units 44a to 44c include tensile wire retaining units 43a to 43c.

The outer armoring wire of the landing cable 21 (equivalent to the outer armoring wire 52 of Fig. 4) is fixed to the housing 47 by the outer wire retaining unit 42. The LW core cables 51a to 51c of the landing cable 21 are led to the inside of the mold units 44a to 44c in the housing 47. The LW core cables 51a to 51c comply with the UJ. The UJ is described in the Background Art section.

The branch submarine cables 21a to 21c also comply with the UJ. The branch submarine cables 21a to 21c are fixed to the mold units 44a to 44c by the tensile wire retaining units 43a to 43c. Although not illustrated in the diagram, since the mold units 44a to 44c are fixed to the housing 47, the branch submarine cables 21a to 21c are fixed to the housing 47. As a result, the branch submarine cables 21a to 21c are fixed to the outer armoring wire included in the landing cable 21 via the housing 47.

The optical fiber and the power feed line of the optical fiber that is not illustrated included in the LW core cable led by each mold unit are connected to the optical fiber and the power feed line of the optical fiber included by the branch submarine cable fixed to the mold member. The connection is performed by a method disclosed in the UJ specification. The UJ is described in the Background Art section.

The inside of the mold units 44a to 44c is molded with PE, for example. It is generally known that molding with polyethylene can secure the connection between optical fibers and between power feed lines, electrical insulation, water pressure resistance, and tensile strength equivalent to the cable.

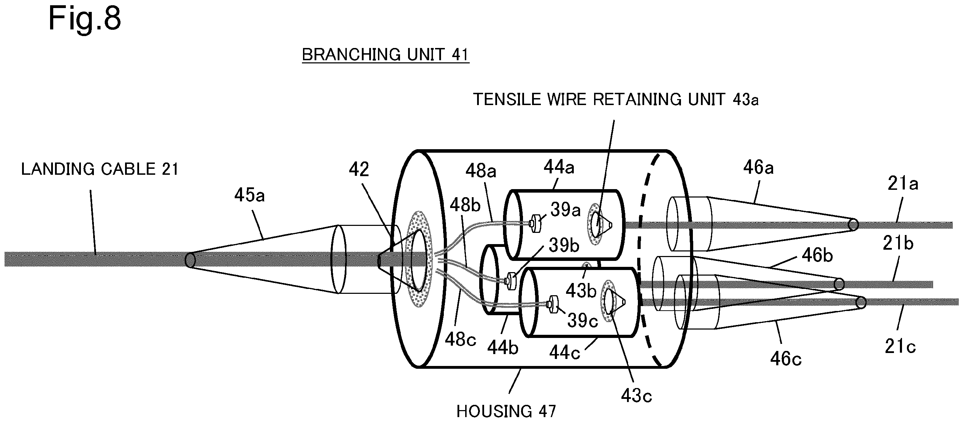

Fig. 8 is a schematic diagram illustrating the second configuration example of a branching unit 41. The branching unit 41 illustrated in Fig. 8 is used when the landing cable 21 is designed exclusively as illustrated in Fig. 6 and does not include an LW core cable. The branching unit 41 illustrated in Fig. 8 differs from the one illustrated in Fig. 7 in that the optical wiring from the landing cable 21 led into each mold unit is not the LW core cables 51a to 51c of the landing cable 21, but the tail cables 48a to 48c. The tail cable is described in the Background Art section.

The tail cables 48a to 48c are also fixed to the mold units 44a to 44c by the chips 39a to 39c. The chip is described in the Background Art section.

The branching unit 41 illustrated in Fig. 8 also differs from the one illustrated in Fig. 7 in that the optical fibers and the power feed lines of the tail cables 48a to 48c and the branch submarine cables 21a to 21c are connected in a configuration similar to the cable coupling. The cable coupling is described in the Background Art section.

The description of the branching unit 41 illustrated in Fig. 8 excluding the above-described point is the same as the description of Fig. 7.

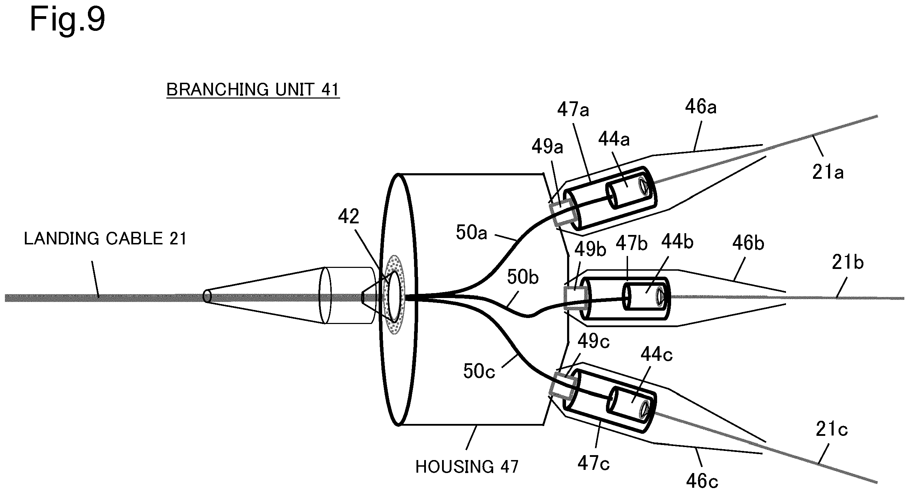

Fig. 9 is a schematic diagram illustrating a third configuration example of the branching unit 41. The branching unit 41 illustrated in Fig. 9 differs from the ones illustrated in Fig. 7 and Fig. 8 in that the housing 47a to 47c that include mold units 44a to 44c are arranged outside the housing 47 and are connected to the housing 47 by universal couplings 49a to 49c. The branching unit 41 illustrated in Fig. 9 differs from the ones illustrated in Fig. 7 and Fig. 8 in that the boots 46a to 46c cover the housings 47a to 47c.

The optical wirings 50a to 50c illustrated in Fig. 9 are one of the LW core cables 51a to 51c illustrated in Fig. 7 and the tail cables 48a to 48c illustrated in Fig. 8. In the case of the optical wirings 50a to 50c are the LW core cables 51a to 51c illustrated in Fig. 7, the optical wirings 50a to 50c are connected to the branch submarine cables 21a to 21c in a manner that complies with the UJ specification, for example. On the other hand, when the optical wirings 50a to 50c are the tail cables 48a to 48c illustrated in Fig. 8, the optical wirings 50a to 50c are connected to the branch submarine cables 21a to 21c by the aforementioned cable couplings.

### [Effect]

In the submarine cable system according to the present example embodiment, the landing cable includes a preliminary optical fiber and a preliminary power feed line for a case when it is necessary to additionally install another submarine cable. The preliminary wires are connected to the streamed-off branch submarine cable. Therefore, in the submarine cable system, by connecting a new submarine cable to the streamed-off branch submarine cable, another submarine cable can be additionally installed without conducting new landing construction. As a result, the submarine cable system may suppress the occurrence of cable landing construction.

### <Third Example Embodiment>

The preliminary optical fiber of the landing cable according to the first and second example embodiments cannot be used for communication because they are not connected to the communication counterpart. However, the preliminary optical fiber can be applied to vibration or temperature sensing in a zone in which the landing cable is installed. This will be described as the third example embodiment.

First, optical fiber sensing is briefly described. An optical fiber, that is originally a medium of transferring a signal, can also carry information about the temperature and vibration of the environment in which it is placed on the light transmitted therein. Therefore, an optical fiber is increasingly being used for sensing purposes.

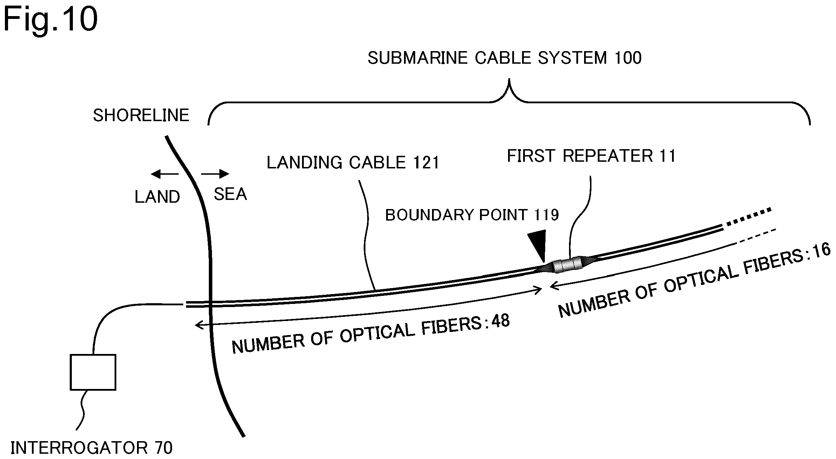

Fig. 10 is a schematic connection diagram illustrating a configuration example in which optical fiber sensing is applied to the submarine cable system 100 illustrated in Fig. 1.

An interrogator 70 periodically transmits pulse light to an optical fiber of the landing cable 121. Then, due to a back-scattering light phenomenon in the optical fiber, weak light returns from the optical fiber to the interrogator 70. By analyzing the light, the temperature and vibration information at each position on the optical fiber at the moment the pulse light passed can be obtained.
One of the features of optical fiber sensing is that only one optical fiber is required, and an electrical wire for power and signal transmission is not necessary. Therefore, optical fiber sensing can be applied to a preliminary optical fiber of the landing cable of one of the example embodiments, and thereby the landing cable 121 can be utilized for monitoring the temperature and vibration of the seabed in the zone up to the boundary point 119.

The optical fiber for optical fiber sensing may either be assigned for temporary usage until the start of communication usage in the future or assigned as a dedicated for sensing.

### <Minimum Example Embodiment of the Example Embodiments>

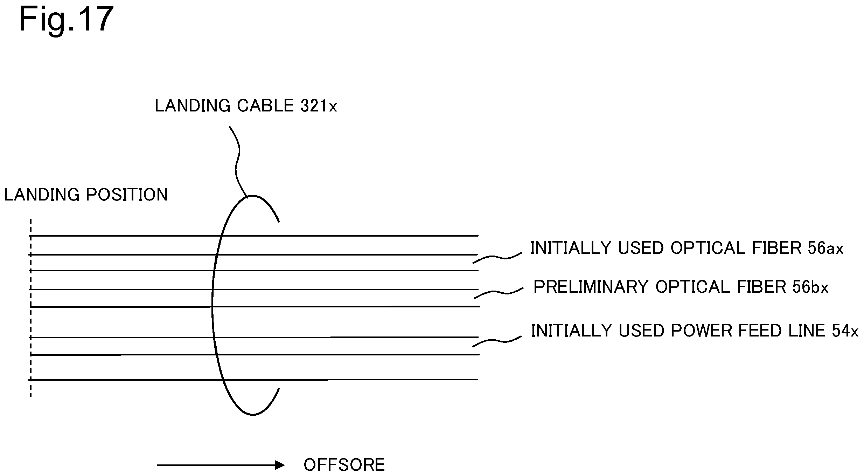

Fig. 17 is a schematic diagram illustrating a configuration of a landing cable 321x that is a minimum configuration of the landing cable according to the example embodiment.

The landing cable 321x is a landing cable installed offshore from the cable landing position. The landing cable 321x includes an initially used optical fiber 56ax that is an optical fiber used since the start of the communication by the landing cable 321x and an initially used power feed line 54x that is a power feed line initially used from the start. In addition, the landing cable 321x includes a preliminary optical fiber 56bx that is a preliminary optical fiber.

The preliminary optical fiber 56bx connects an endpoint on a side of the cable landing position and a boundary point with a cable district not including the preliminary optical fiber 56bx. In the boundary point, a preliminary optical fiber endpoint that is an endpoint of the preliminary optical fiber 56bx is maintained in a future usable state.

The disposition of each of the initially used optical fiber 56ax, the preliminary optical fiber 56bx, and the initially used power feed line 54x is not limited to the case illustrated in Fig. 17 but is optional.

The preliminary optical fiber 56bx is preliminary, and the endpoint is maintained in a future usable state. Therefore, when the number of optical fibers of the submarine cable connected to the landing cable 321x increases, the preliminary optical fiber 56bx enables connecting a new optical fiber across the shoreline. As a result, the landing cable 321x may suppress the occurrence of new cable landing construction of a submarine cable.

Thus, the landing cable 321x has the effect described in the Advantageous Effects of Invention section, due to the above-described configuration.

Here, the landing cable 321x illustrated in Fig. 17 is the landing cable 21 illustrated in Fig. 1 or Fig. 3, for example.

The initially used power feed line 54x is one of the power feed line illustrated in Fig. 4, the power feed line included in the LW core cables 51a to 51f illustrated in Fig. 5, or the power feed lines 54a to 54e illustrated in Fig. 6 that is used since the start of communication.

The initially used optical fiber 56ax is an optical fiber included in the landing cable 21 connected to the optical fiber included in the submarine cable 22 illustrated in Fig. 1, for example. Alternatively, the initially used optical fiber 56ax is among the optical fibers included in the landing cable 121 illustrated in Fig. 2 which is connected to the optical fiber included in the tail cable 23, for example. Alternatively, the initially used optical fiber 56ax is an optical fiber included in the optical fiber included in the landing cable 21 connected to the optical fiber included in the branch submarine cable 21c illustrated in Fig. 3, for example.

The landing position is the landing position 97 illustrated in Fig. 1 or Fig. 3, for example.

The preliminary optical fiber 56bx is an optical fiber included in the optical fiber included in the landing cable 21 that is not connected to the optical fiber included in the submarine cable 22 illustrated in Fig. 1, for example. Alternatively, the preliminary optical fiber 56bx is an optical fiber whose proximity of the endpoint is stored in the optical fiber slack storage unit 31 illustrated in Fig. 2, for example. Alternatively, the preliminary optical fiber 56bx is an optical fiber included in the optical fiber included in the landing cable 21 connected to an optical fiber group included in the optical fiber included in the branch submarine cables 21a, 21b, and 21d illustrated in Fig. 3, for example.

The boundary point is the boundary point 119 illustrated in Fig. 1 or Fig. 10 or the boundary point 219 illustrated in Fig. 3, for example.

The preliminary optical fiber endpoint is an endpoint of an optical fiber included in the optical fiber included in the landing cable 21 that is stored in the optical fiber slack storage unit 31 illustrated in Fig. 2, for example. Alternatively, the preliminary optical fiber endpoint is an endpoint of an optical fiber included in the optical fiber included in the landing cable 21 connected to an optical fiber group included in the branch submarine cables 21a, 21b, and 21d illustrated in Fig. 3, for example.

While the invention has been particularly shown and described with reference to exemplary embodiments thereof, the invention is not limited to these example embodiments, and various changes in form and details may be made therein without departing from the spirit and scope of the present invention as defined by the claims. For example, the configuration of an element illustrated in each diagram is merely an example for helping to understand the present invention and is not limited to the configuration illustrated in the diagrams.

The whole or part of the example embodiments disclosed above can be described as, but not limited to, the following supplementary notes.

### (Supplementary Note 1)

A landing cable that is installed offshore from a cable landing position, the landing cable including
a preliminary optical fiber being a preliminary optical fiber in addition to an initially used optical fiber being an optical fiber used since start of communication by the landing cable and an initially used power feed line being a power feed line initially used from the start, in which
the preliminary optical fiber connects an endpoint on a side of the cable landing position and a boundary point with a district of a cable not including the preliminary optical fiber, and
a preliminary optical fiber endpoint being an endpoint of the preliminary optical fiber is maintained in a future usable state at the boundary point.

### (Supplementary Note 2)

The landing cable according to supplementary note 1, in which the boundary point is located on a landward side of a cable coupling unit on a landward side of a first repeater or a piece of submarine equipment when being traced from the landing position.

### (Supplementary Note 3)

The landing cable according to supplementary note 1 or 2, in which the boundary point is located outside territorial sea.

### (Supplementary Note 4)

The landing cable according to any one of supplementary notes 1 to 3, in which the boundary point is located in at least one of an area exceeding a zone in which a cable burial method is necessary, an area exceeding a zone in which a horizontal directional drilling method is necessary, and an area exceeding a zone in which authorization acquisition of installation operation is necessary.

### (Supplementary Note 5)

The landing cable according to any one of supplementary notes 1 to 4, further including a preliminary power feed line on an endpoint at a side of the landing position, in which:
the preliminary optical fiber and the preliminary power feed line are connected to the boundary point;
at the boundary point, the preliminary optical fiber endpoint and a preliminary power feed line endpoint being an endpoint of the preliminary power feed line are maintained in a future usable state, bundled into one, and provided with a cable branching unit at an end on an offshore side;
the landing cable is branched into an initially used submarine cable including the initially used optical fiber and the initially used power feed line, and a plurality of preliminary submarine cables having the preliminary optical fiber and the preliminary power feed line;
the preliminary optical fiber endpoint and the preliminary power feed line endpoint are maintained in a future usable state at a submarine endpoint within the preliminary submarine cable; and
the boundary point and the preliminary submarine cable are located in an area being landward side than a cable coupling unit on a landward side of a first repeater or the first submarine equipment when being traced from the landing position, outside territorial sea, in an area exceeding a zone in which a cable burial method is necessary, in an area exceeding a zone in which a horizontal directional drilling method is necessary, and in an area exceeding a zone in which authorization acquisition of installation operation is necessary.

### (Supplementary Note 6)

The landing cable according to supplementary note 5, in which a streaming cable is connected to a submarine endpoint of the preliminary submarine cable, and
the boundary point, the preliminary submarine cable, and the streaming cable are arranged in an area being landward side than the cable coupling unit, outside the territorial sea, in an area exceeding a zone in which the cable burial method is necessary, in an area exceeding a zone in which the horizontal directional drilling method is necessary, and in an area exceeding a zone in which the authorization acquisition is necessary.

### (Supplementary Note 7)

The landing cable according to supplementary note 5 or 6 that is a complex submarine cable made by compounding a plurality of armorless submarine cables, in which
the armorless submarine cable includes an optical fiber and a power feed line, and
the cable branching unit separates a cable that is made by compounding a plurality of the armorless submarine cables into units of the armorless submarine cable and the landing cable is connected by using an existing submarine cable connection part and connection technique.

### (Supplementary Note 8)

The landing cable according to any one of supplementary notes 1 to 7, in which the preliminary optical fiber is connected as a loopback connection to another of the preliminary optical fiber at the boundary point.

### (Supplementary Note 9)

The landing cable according to any one of supplementary notes 1 to 8, in which some of optical fibers that are connected to the boundary point are used for an optical fiber sensing purpose.

### (Supplementary Note 10)

A partial landing cable that is all portions of the submarine cable according to any one of supplementary notes 1 to 9 in an area of a country in which the landing position is set, in which the boundary point is arranged outside the area or supposed to be arranged outside the area.

### (Supplementary Note 11)

A landing cable including an optical fiber group including a plurality of optical fibers, and a power feed line group including a plurality of power feed lines, the landing cable being installed from a landing position, in which:
an endpoint that is not arranged at the landing position is arranged at a first repeater being a first repeater traced from the landing position or between the landing position and the first repeater;
the optical fiber group includes a first optical fiber group and a second optical fiber group;
the optical fiber of the first optical fiber group is the optical fiber connecting to a beyond-first-repeater submarine cable being a submarine cable after the first repeater;
the optical fiber of the second optical fiber group is the optical fiber that is preliminary and not connected to the beyond-first-repeater submarine cable; and
an endpoint of the optical fiber of the second optical fiber group is maintained in a usable state.

### (Supplementary Note 12)

The landing cable according to supplementary note 11, in which the endpoint of the optical fiber is arranged in an area outside territorial sea.

### (Supplementary Note 13)

The landing cable according to supplementary note 11 or 12, in which the endpoint of the optical fiber is located in at least one of an area exceeding a zone in which a cable burial method is necessary, an area exceeding a zone in which a zone in which a horizontal directional drilling method is necessary is necessary, and an area exceeding a zone in which authorization acquisition of installation operation is necessary.

### (Supplementary Note 14)

The landing cable according to any one of supplementary notes 11 to 13, in which optical fibers included in the second optical fiber group are connected as a loopback connection.

### (Supplementary Note 15)

The landing cable according to any one of supplementary notes 11 to 14, in which the optical fiber of the second optical fiber group is maintained in a usable state by retaining a seaward side optical fiber endpoint of an optical fiber including the optical fiber of the second optical fiber group in an optical fiber slack storage unit.

### (Supplementary Note 16)

The landing cable according to supplementary note 15, in which the optical fiber of the second optical fiber group is supposed to be used when a number of beyond-first-repeater submarine cable optical fibers included in the beyond-first-repeater submarine cable increases.

### (Supplementary Note 17)

The landing cable according to supplementary note 16, in which the endpoint on a seaward side of the optical fiber of the first optical fiber group is connected to the beyond-first-repeater submarine cable by a connection device, and the optical fiber slack storage unit is included in the connection device.

### (Supplementary Note 18)

The landing cable according to supplementary note 17, in which the optical fiber slack storage unit is molded with resin.

### (Supplementary Note 19)

The landing cable according to supplementary note 18, in which the resin is polyethylene.

### (Supplementary Note 20)

The landing cable according to any one of supplementary notes 17 to 19, in which the connection device is included in the first repeater.

### (Supplementary Note 21)

The landing cable according to any one of supplementary notes 11 to 14, further including a branching unit, in which a seaward side from the branching unit is split as a second plurality of branch submarine cables, some of the branch submarine cables are connected to the beyond-first-repeater submarine cable, and the optical fiber included in another of the branch submarine cable is the optical fiber of the second optical fiber group.

### (Supplementary Note 22)

The landing cable according to supplementary note 21, in which the optical fiber of the second optical fiber group is supposed to be used when another submarine cable is added in future.

### (Supplementary Note 23)

The landing cable according to supplementary note 21 or 22, in which streaming-off is performed on an endpoint of a branch submarine cable that is an endpoint of the some of the branch submarine cables that is not connected to the branching unit, and the endpoint of the optical fiber of the second optical fiber group included in the some of the branch submarine cables is maintained in the usable state because of the streaming-off.

### (Supplementary Note 24)

The landing cable according to supplementary note 23, in which the streaming-off is connection of a dummy submarine cable or a rope to the branch submarine cable endpoint or sealing of the branch submarine cable endpoint.

### (Supplementary Note 25)

The landing cable according to any one of supplementary notes 21 to 24, in which a number of the power feed lines is the plural number.

### (Supplementary Note 26)

The landing cable according to any one of supplementary notes 21 to 25, further including a configuration in which a second plurality of armorless submarine cables without armor are bundled.

### (Supplementary Note 27)

The landing cable according to any one of supplementary notes 21 to 25, further including a third plurality of combinations of the optical fiber and the power feed line that are equivalent to combinations of a beyond-first-repeater submarine cable optical fiber of the beyond-first-repeater submarine cable and a beyond-first-repeater submarine cable power feed line of the beyond-first-repeater submarine cable.

### (Supplementary Note 28)

A partial landing cable that is all portions of the landing submarine cable according to any one of supplementary notes 11 to 27 in an area of a country in which the optical fiber endpoint on a landward side is arranged, in which the optical fiber endpoint on a seaward side is arranged outside the area, or is supposed to be arranged outside the area.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2019-110497, filed on June 13, 2019, the disclosure of which is incorporated herein in its entirety by reference.

### [Reference signs List]

100, 200 Submarine cable system
11 First repeater
16 Cable landing station
17 Beach manhole
18 Land cable
119, 219 Boundary point
121, 221 Landing cable
321x Landing cable
21a, 21b, 21c, 21d Branch submarine cable
23 Tail cable
24 Cable coupling unit
31 Optical fiber slack storage unit
33, 43a, 43b, 43c Tensile wire retaining unit
34 Mold unit
35 Storage unit
36 Bellows unit
37 Repeater housing
38, 45a, 46a, 46b, 46c Boot
39a, 39b, 39c Chip
41 Branching unit
42 Outer wire retaining unit
44a, 44b, 44c Mold unit
47, 47a, 47b, 47c Housing
48a, 48b, 48c Tail cable
49a, 49b, 49c Universal coupling
51 LW core cable
51a, 51b, 51c, 51d, 51e, 51n LW core cable
52 Outer armoring wire
54 Power feed line
54x Initially used power feed line
56 Optical fiber housing pipe
56ax Initially used optical fiber
56bx Preliminary optical fiber
61 Tensile wire
62, 62a, 62b, 62c, 62d, 62e Power feed line
621 Power feed conductor
622 Power feed line sheath
63, 63a, 63b, 63c, 63d, 63e Optical fiber housing pipe
70 Interrogator
97 Landing position

## Claims

1. A landing cable that is installed offshore from a cable landing position, the landing cable comprising
a preliminary optical fiber being a preliminary optical fiber in addition to an initially used optical fiber being an optical fiber used since start of communication by the landing cable and an initially used power feed line being a power feed line initially used from the start, wherein
the preliminary optical fiber connects an endpoint on a side of the cable landing position and a boundary point with a district of a cable not including the preliminary optical fiber, and
a preliminary optical fiber endpoint being an endpoint of the preliminary optical fiber is maintained in a future usable state at the boundary point.

2. The landing cable according to claim 1, wherein the boundary point is located on a landward side of a cable coupling unit on a landward side of a first repeater or a piece of submarine equipment when being traced from the landing position.

3. The landing cable according to claim 1 or 2, wherein the boundary point is located outside territorial sea.

4. The landing cable according to any one of claims 1 to 3, wherein the boundary point is located in at least one of an area exceeding a zone in which a cable burial method is necessary, an area exceeding a zone in which a horizontal directional drilling method is necessary, and an area exceeding a zone in which authorization acquisition of installation operation is necessary.

5. The landing cable according to any one of claims 1 to 4, further comprising a preliminary power feed line at an endpoint on a side of the landing position, wherein:
the preliminary optical fiber and the preliminary power feed line are connected to the boundary point;
at the boundary point, the preliminary optical fiber endpoint and a preliminary power feed line endpoint being an endpoint of the preliminary power feed line are maintained in a future usable state, bundled into one, and provided with a cable branching unit at an end on an offshore side;
the landing cable is branched into an initially used submarine cable including the initially used optical fiber and the initially used power feed line, and a plurality of preliminary submarine cables having the preliminary optical fiber and the preliminary power feed line;
the preliminary optical fiber endpoint and the preliminary power feed line endpoint are maintained in a future usable state at a submarine endpoint within the preliminary submarine cable; and
the boundary point and the preliminary submarine cable are located in an area being landward side than a cable coupling unit on a landward side of a first repeater or the first submarine equipment when being traced from the landing position, outside territorial sea, in an area exceeding a zone in which a cable burial method is necessary, in an area exceeding a zone in which a horizontal directional drilling method is necessary, and in an area exceeding a zone in which authorization acquisition of installation operation is necessary.

6. The landing cable according to claim 5, wherein
a streaming cable is connected to a submarine endpoint of the preliminary submarine cable, and
the boundary point, the preliminary submarine cable, and the streaming cable are arranged in an area being landward side than the cable coupling unit, outside the territorial sea, in an area exceeding a zone in which the cable burial method is necessary, in an area exceeding a zone in which the horizontal directional drilling method is necessary, and in an area exceeding a zone in which the authorization acquisition is necessary.

7. The landing cable according to claim 5 or 6 that is a complex submarine cable made by compounding a plurality of armorless submarine cables, wherein
the armorless submarine cable includes an optical fiber and a power feed line, and
the cable branching unit separates a cable that is made by compounding a plurality of the armorless submarine cables into units of the armorless submarine cable and the landing cable is connected by using an existing submarine cable connection part and connection technique.

8. The landing cable according to any one of claims 1 to 7, wherein the preliminary optical fiber is connected as a loopback connection to another of the preliminary optical fiber at the boundary point.

9. The landing cable according to any one of claims 1 to 8, wherein some of optical fibers that are connected to the boundary point are used for an optical fiber sensing purpose.

10. A partial landing cable that is all portions of the submarine cable according to any one of claims 1 to 9 in an area of a country in which the landing position is set, wherein the boundary point is arranged outside the area or supposed to be arranged outside the area.

11. A landing cable comprising an optical fiber group including a plurality of optical fibers, and a power feed line group including a plurality of power feed lines, the landing cable being installed from a landing position, wherein:
an endpoint that is not arranged at the landing position is arranged at a first repeater being a first repeater traced from the landing position or between the landing position and the first repeater;
the optical fiber group includes a first optical fiber group and a second optical fiber group;
the optical fiber of the first optical fiber group is the optical fiber connecting to a beyond-first-repeater submarine cable being a submarine cable after the first repeater;
the optical fiber of the second optical fiber group is the optical fiber that is preliminary and not connected to the beyond-first-repeater submarine cable; and
an endpoint of the optical fiber of the second optical fiber group is maintained in a usable state.

12. The landing cable according to claim 11, wherein the endpoint is arranged in an area outside territorial sea.

13. The landing cable according to claim 11 or 12, wherein the endpoint is located in at least one of an area exceeding a zone in which a cable burial method is necessary, an area exceeding a zone in which a zone in which a horizontal directional drilling method is necessary is necessary, and an area exceeding a zone in which authorization acquisition of installation operation is necessary.

14. The landing cable according to any one of claims 11 to 13, wherein optical fibers included in the second optical fiber group are connected as a loopback connection.

15. The landing cable according to any one of claims 11 to 14, wherein the optical fiber of the second optical fiber group is maintained in a usable state by retaining a seaward side optical fiber endpoint of an optical fiber including the optical fiber of the second optical fiber group in an optical fiber slack storage unit.

16. The landing cable according to claim 15, wherein the optical fiber of the second optical fiber group is supposed to be used when a number of beyond-first-repeater submarine cable optical fibers included in the beyond-first-repeater submarine cable increases.

17. The landing cable according to claim 16, wherein the endpoint on a seaward side of the optical fiber of the first optical fiber group is connected to the beyond-first-repeater submarine cable by a connection device, and the optical fiber slack storage unit is included in the connection device.

18. The landing cable according to claim 17, wherein the optical fiber slack storage unit is molded with resin.

19. The landing cable according to claim 18, wherein the resin is polyethylene.

20. The landing cable according to any one of claims 17 to 19, wherein the connection device is included in the first repeater.

21. The landing cable according to any one of claims 11 to 14, further comprising a branching unit, wherein a seaward side from the branching unit is split as a second plurality of branch submarine cables, some of the branch submarine cables are connected to the beyond-first-repeater submarine cable, and the optical fiber included in another of the branch submarine cable is the optical fiber of the second optical fiber group.

22. The landing cable according to claim 21, wherein the optical fiber of the second optical fiber group is supposed to be used when another submarine cable is added in future.

23. The landing cable according to claim 21 or 22, wherein streaming-off is performed on an endpoint of a branch submarine cable that is an endpoint of the some of the branch submarine cables that is not connected to the branching unit, and the endpoint of the optical fiber of the second optical fiber group included in the some of the branch submarine cables is maintained in the usable state because of the streaming-off.

24. The landing cable according to claim 23, wherein the streaming-off is connection of a dummy submarine cable or a rope to the branch submarine cable endpoint or sealing of the branch submarine cable endpoint.

25. The landing cable according to any one of claims 21 to 24, wherein a number of the power feed lines is the plural number.

26. The landing cable according to any one of claims 21 to 25, further comprising a configuration in which a second plurality of armorless submarine cables without armor are bundled.

27. The landing cable according to any one of claims 21 to 25, further comprising a third plurality of combinations of the optical fiber and the power feed line that are equivalent to combinations of a beyond-first-repeater submarine cable optical fiber of the beyond-first-repeater submarine cable and a beyond-first-repeater submarine cable power feed line of the beyond-first-repeater submarine cable.

28. A partial landing cable that is all portions of the landing submarine cable according to any one of claims 11 to 27 in an area of a country in which the endpoint on a landward side is arranged, wherein the endpoint on a seaward side is arranged outside the area, or is supposed to be arranged outside the area.
